# EUROPEAN PATENT APPLICATION

(11) **EP 4 542 591 A1**
(43) Date of publication of application: **23.04.2025**
(21) Application number: 24207052.2
(22) Date of filing: 16.10.2024
(51) Int. Cl.: H01F 27/29, H01F 38/08, H02M 3/00, H01F 27/30, H01F 27/28

(54) **LOW-LEAKAGE PLANAR TRANSFORMERS FOR WELDING-TYPE POWER SUPPLIES**

(30) Priority: 17.10.2023 US 202363590894 P; 14.10.2024 US 202418914731
(71) Applicant: Illinois Tool Works Inc., Glenview IL 60025 (US)
(72) Inventor: HENRY, Andrew Joseph, Glenview, IL 60025 (US)
(74) Representative: HGF

(57) **Abstract**

Disclosed example planar transformers include: a magnetic core; a first primary winding board secured to the magnetic core; a first secondary winding board secured to the magnetic core, wherein each of the first primary winding board and the first secondary winding board comprise: a first printed winding on a first layer of a circuit board; first and second mounting tabs on the first layer of the circuit board or a third layer of the circuit board, and coupled to the first printed winding; a second printed winding on a second layer of the circuit board; and third and fourth mounting tabs on the second layer of the circuit board or a fourth layer of the circuit board, and coupled to the second printed winding; and a first spacer to position the first primary winding board a predetermined distance from the first secondary winding board.

## Description

### RELATED APPLICATIONS

The present application claims the benefit of U.S. Provisional Patent Application Serial No. 63/590,894, filed October 17, 2024, entitled "LOW-LEAKAGE PLANAR TRANSFORMERS FOR WELDING-TYPE POWER SUPPLIES." The entirety of U.S. Provisional Patent Application Serial No. 63/590,894 is expressly incorporated herein by reference.

### FIELD OF THE DISCLOSURE

The present disclosure relates to welding-type devices and, more particularly, to low-leakage planar transformers for welding-type power supplies.

### BACKGROUND

Welding-type systems often require a voltage step-down of the primary or input power for a particular welding, cutting, or heating application. Primary, or input power, is typically supplied to the welding, cutting, or heating system at voltages ranging from 110V to 1000V. However, the desired output voltage is typically lower. Generally, transformers, rectifiers, and/or filters are used to convert the input power to usable power for the welding-type application.

A transformer is typically used to reduce or increase the voltage of input power and/or intermediate power to output power that is usable for the particular welding, cutting, or heating application. Transformers are typically made up of primary and secondary windings, or windings, around a metal core. As such, the primary voltage, or input voltage, enters the primary winding and creates a magnetic field that induces voltage in the secondary winding. The secondary winding then yields a voltage that is usable for the welding, cutting, or heating application. Transformers also provide electrical isolation between the input circuit (e.g., the source of input power) and the output circuit (e.g., the welding output).

### SUMMARY

The present disclosure relates to high-frequency transformers and, more particularly, to low-leakage planar transformers for welding-type power supplies, substantially as illustrated by and described in connection with at least one of the figures, as set forth more completely in the claims.

### BRIEF DESCRIPTION OF THE DRAWINGS

FIG. 1 is an illustration of an example welding-type system in accordance with aspects of this disclosure.
FIG. 2 is a block diagram of an example welding-type power supply including a transformer.
FIG. 3 is an exploded view of an example set of winding boards that may be used to implement a low-leakage planar transformer.
FIGS. 4A-4D illustrate example printed circuit board layers of one of the winding boards of FIG. 3.
FIG. 5 is a partially exploded view of an example transformer that may be used to implement the transformer of FIG. 2.
FIG. 6 is another partially exploded view of the example transformer of FIG. 5, including a magnetic core.
FIG. 7 is a more detailed view of an example spacing clip of FIG. 5.
FIG. 8 illustrates the example transformer of FIGS. 5 and 6 coupled to a second circuit board.
FIGS. 9A-9D illustrate example printed circuit board layers of another example winding board.

The figures are not necessarily to scale. Where appropriate, similar or identical reference numerals are used to refer to similar or identical elements.

### DETAILED DESCRIPTION

High-frequency transformers (e.g., rated to operate between 10 kHz and 500 kHz) are typically used as part of inverter-based power supplies. Leakage inductance in conventional high-frequency transformers (e.g., resulting from primary winding flux that does not link to the secondary winding) may negatively impact the performance of welding-type power supplies. For example, leakage inductance present in conventional high-frequency transformers may reduce the output of the welding-type power supply, may lead to overheating of the primary and/or secondary windings, and/or may be detrimental to transistor switching circuits in the welding-type power supply.

Some switched mode power supply circuits use transistor switches both as rectifiers and for coupling the transformer windings in such a way as to provide output current in either polarity. Examples of such switched mode power supply circuits are disclosed in U.S. Patent No. 11,027,357, issued June 8, 2021, to Andrew Henry. The entirety of U.S. Patent No. 11,027,357 is incorporated herein by reference. Reducing the voltage rating of other components to reduce the drain-source resistance (R_{dson}) in such switched mode power supply circuits can reduce the losses in the transistors. The peak voltage experienced by the circuit components as the transistors turn off (e.g., due to resonance caused by parasitic elements in the circuit) affects the voltage rating of the circuit elements. Leakage inductance in conventional transformers can be a significant contributor to the undesirable resonance and voltage spikes.

Disclosed example planar transformers and power supplies have a low leakage inductance, a reduced cost, and enhanced flexibility relative to the number of turns. In some examples, a planar transformer includes a primary winding board to implement the primary winding of a transformer, and one or more secondary winding boards to implement the secondary winding of the transformer. Each of the primary and secondary winding boards are constructed of layers of substrate and printed conductive strip to provide one or more turns of the transformer.

Both the primary winding board and the secondary winding board(s) are identical in some disclosed examples, and may have different orientations relative to the magnetic core of the transformer. Disclosed example primary winding boards and the secondary winding boards include mounting tabs which couple the transformer, both mechanically and electrically, to other components of the power supply. In some examples, the primary and secondary winding boards are implemented using cost effective materials and construction, such as using fiberglass circuit board layers and copper strip or foil and/or using four-layer construction.

In some examples, each of the primary and secondary winding boards include two turns, and the ends of each of the turns are coupled to different mounting tabs of the circuit board. In such examples, the same board configuration can be used for different turn ratios by connecting the turns in series or in parallel.

Disclosed example primary winding boards are separated from the secondary winding boards by one or more spacers, which position the primary winding board a predetermined distance from the secondary winding board(s). As a result of the fixed geometry (in contrast with wound wire windings), the parasitic inductance, parasitic capacitance, and high-frequency electromagnetic effects are well-controlled in the disclosed example transformers.

Disclosed example winding boards are flat and offer a large exposed area. The large exposed area provides enhanced cooling of the turns by convection to the ambient air relative to conventional wound wire transformers, and allows operation at high frequencies e.g., greater than 50 kHz) without incurring increased temperatures due to skin effect. The geometry of disclosed example winding boards allows the transformer to operate at higher average loads and higher peak loads, while maintaining an average temperature of 90 °C. In contrast with conventional transformers, the transformer and power supply are configured and operated such that the mean operating temperature of the transformer at peak load is less than 90 °C, such that the substrate of the printed circuit board (e.g., FR-4 rated fiberglass) may be used as part of the insulation system.

As used herein, the terms "welding-type power supply," "welding-type power source," and "welding-type system," refers to any device capable of, when power is applied thereto, supplying welding, cladding, plasma cutting, induction heating, laser (including laser welding, laser hybrid, and laser cladding), carbon arc cutting or gouging and/or resistive preheating, including but not limited to transformer-rectifiers, inverters, converters, resonant power supplies, quasi-resonant power supplies, switch-mode power supplies, etc., as well as control circuitry and other ancillary circuitry associated therewith.

As used herein, the term "welding-type power" refers to power suitable for welding, plasma cutting, induction heating, CAC-A and/or hot wire welding/preheating (including laser welding and laser cladding).

As used herein, the term welding-type output means an output signal that is suitable for welding, plasma cutting or induction heating.

As used herein, the term "torch" or "welding-type tool" can include a hand-held or robotic welding torch, gun, or other device used to create the welding arc.

As used herein, the term "welding mode" is the type of process or output used, such as CC, CV, pulse, MIG, TIG, spray, short circuit, etc.

Welding operation, as used herein, includes both actual welds (e.g., resulting in joining, such as welding or brazing) of two or more physical objects, an overlaying, texturing, and/or heat-treating of a physical object, and/or a cut of a physical object) and simulated or virtual welds (e.g., a visualization of a weld without a physical weld occurring).

The term "power" is used throughout this specification for convenience, but also includes related measures such as energy, current, voltage, and enthalpy. For example, controlling "power" may involve controlling voltage, current, energy, and/or enthalpy, and/or controlling based on "power" may involve controlling based on voltage, current, energy, and/or enthalpy. Electric power of the kind measured in watts as the product of voltage and current (e.g., V*I power) is referred to herein as "wattage."

As utilized herein the terms "circuits" and "circuitry" refer to physical electronic components (i.e. hardware) and any software and/or firmware ("code") which may configure the hardware, be executed by the hardware, and or otherwise be associated with the hardware. As used herein, for example, a particular processor and memory may comprise a first "circuit" when executing a first one or more lines of code and may comprise a second "circuit" when executing a second one or more lines of code.

The terms "control circuit" and "control circuitry," as used herein, may include digital and/or analog circuitry, discrete and/or integrated circuitry, microprocessors, digital signal processors (DSPs), and/or other logic circuitry, and/or associated software, hardware, and/or firmware. Control circuits may include memory and a processor to execute instructions stored in memory. Control circuits or control circuitry may be located on one or more circuit boards, that form part or all of a controller, and are used to control a welding process, a device such as a power source or wire feeder, motion, automation, monitoring, air filtration, displays, and/or any other type of welding-related system.

As used, herein, the term "memory" and/or "memory device" means computer hardware or circuitry to store information for use by a processor and/or other digital device. The memory and/or memory device can be any suitable type of computer memory or any other type of electronic storage medium, such as, for example, read-only memory (ROM), random access memory (RAM), cache memory, compact disc read-only memory (CDROM), electro-optical memory, magneto-optical memory, programmable read-only memory (PROM), erasable programmable read-only memory (EPROM), electrically-erasable programmable read-only memory (EEPROM), flash memory, solid state storage, a computer-readable medium, or the like.

Disclosed example planar transformers include: a magnetic core; a first primary winding board secured to the magnetic core; a first secondary winding board secured to the magnetic core, wherein each of the first primary winding board and the first secondary winding board comprise: a first printed winding on a first layer of a circuit board; first and second mounting tabs on the first layer of the circuit board or a third layer of the circuit board, and coupled to the first printed winding; a second printed winding on a second layer of the circuit board; and third and fourth mounting tabs on the second layer of the circuit board or a fourth layer of the circuit board, and coupled to the second printed winding; and a first spacer positioned between the first primary winding board and the first secondary winding board to position the first primary winding board a predetermined distance from the first secondary winding board.

In some example planar transformers, the first primary winding board and the first secondary winding board are identical. In some example planar transformers, the first primary winding board has a different orientation than the first secondary winding board relative to the magnetic core. Some example planar transformers further include: a second secondary winding board secured to the magnetic core, in which the second secondary winding board is identical to the first secondary winding board; and a second spacer positioned between the first primary winding board and the second secondary winding board to position the first primary winding board a predetermined distance from the second secondary winding board.

In some example planar transformers, the second secondary winding board has a same orientation as the first secondary winding board relative to the magnetic core, and the second secondary winding board is positioned on an opposite side of the first primary winding board from the first secondary winding board.

Some example planar transformers further include: a second primary winding board and a second secondary winding board, in which each of the second primary winding board and the second secondary winding board include the first and second printed windings and the first, second, third, and fourth mounting tabs; and a bobbin configured to position the first primary winding board and the first secondary winding board on a first side of the magnetic core and position the second primary winding board and the second secondary winding board on a second side of the magnetic core.

In some example planar transformers, the first and second circuit board layers insulate the first printed winding and the second printed winding. In some example planar transformers, each of the first printed winding and the second printed winding comprise copper strip. In some example planar transformers, the first printed winding and the second printed winding of the first secondary winding board can be selectively configured in series or in parallel by connecting the first, second, third, and fourth winding tabs. In some example planar transformers, the first printed winding and the second printed winding on of the first primary winding board can be selectively configured in series or in parallel by connecting the first, second, third, and fourth winding tabs.

Disclosed example welding-type power supplies include: a main circuit board; power conversion circuitry coupled to the main circuit board and configured to convert input power to welding-type power, the power conversion circuitry comprising a switched mode power supply, the switched mode power supply including: a switching element coupled to the main circuit board; a planar transformer coupled to the main circuit board, the planar transformer including: a magnetic core; a first primary winding board secured to the magnetic core and coupled to the switching element; a first secondary winding board secured to the magnetic core, wherein each of the first primary winding board and the first secondary winding board include: a first printed winding on a first layer of a circuit board; first and second mounting tabs on the first layer of the circuit board or a third layer of the circuit board, and coupled to the first printed winding; a second printed winding on a second layer of the circuit board; and third and fourth mounting tabs on the second layer of the circuit board or a fourth layer of the circuit board, and coupled to the second printed winding; and a first spacer positioned between the first primary winding board and the first secondary winding board to position the first primary winding board a predetermined distance from the first secondary winding board; and an output stage circuit coupled to the main circuit board and coupled to the first secondary winding board.

In some example welding-type power supplies, the first, second, third and fourth mounting tabs of each of the first primary winding board and the first secondary mounting board are soldered to the main circuit board to attach the planar transformer to the main circuit board. In some example welding-type power supplies the output stage circuit includes at least one of a rectifier or a commutator. In some example welding-type power supplies, the first secondary winding board is mounted to the main circuit board adjacent the output stage circuit. In some example welding-type power supplies, the transformer operates at less than mean of 90C at a rated maximum load of the transformer. In some example welding-type power supplies, the first layer and the second layer of the winding board comprise fiberglass, and the fiberglass is provides primary-to-secondary insulation between the first and second winding boards.

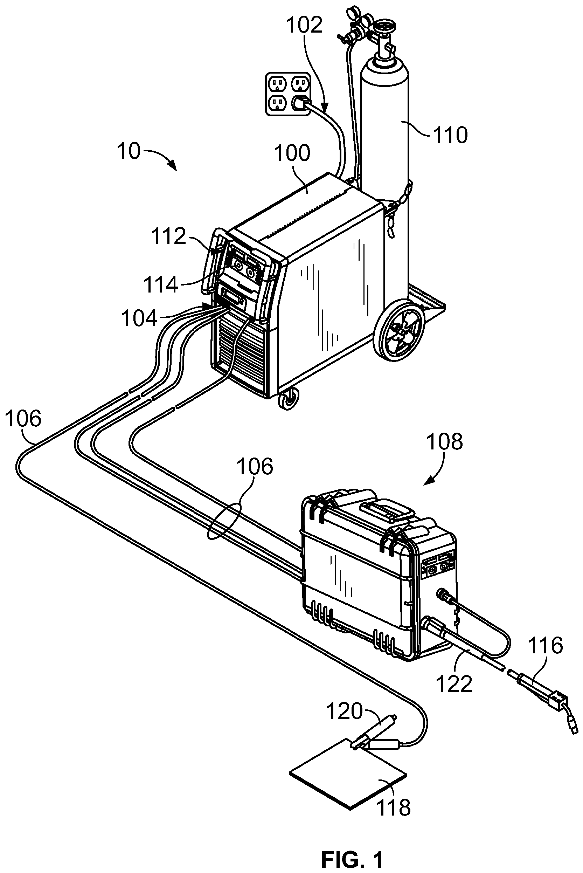

FIG. 1 illustrates an example welding type system 10 including a welding-type power supply 100. A source of power is provided to the welding-type power supply 100 via an AC power cord 102. Typical ranges of AC power may be 115/230VAC or 208-600VAC, and may include single-phase or three-phase power. The welding-type power supply 100 generally supplies power for the welding-type system 10. Weld output 104 provides welding output power via one or more weld cables 106 coupled to a welding torch 116 and a workpiece 118 using a clamp 120. The welding-type power supply 100 includes a high-frequency transformer which is used to reduce or increase the voltage of incoming power so that it is usable for the particular welding-type application. The high-frequency transformer includes a primary winding and a secondary winding, or windings, around a magnetic core. Primary voltage, or input voltage enters the primary winding and creates a magnetic field that induces output voltage that is usable for the welding-type application.

Welding-type output power provided by the welding-type power supply 100 may be in the range of 10 Amps to 600 amps or more, and range from substantially 0 volts in a short circuit condition to 44 volts or more into an open welding arc. Modern welding-type power supplies and systems can provide welding-type power for various welding-type processes which may include advanced waveform generation and control that is responsive to dynamic or static conditions at the welding arc.

The illustrated welding type system includes a wire feeder 108 and a gas supply 110. The welding power supply 100 may provide power and control to other equipment such as a wire feeder 108. In the illustrated example, the welding torch 116 is coupled to the wire feeder 108 via coupler 122 in order to supply welding wire, shielding gas from the gas supply 110, and/or welding-type power to the welding torch 116 during operation of the welding-type system 10. In some examples, the welding power supply 100 may couple and/or directly supply welding-type power to the welding torch 116. The wire feeder 108 may require a certain type of power, for example, 24V or 50V for proper operation of the wire feeder 108 control circuits. The power for the wire feeder 108 may be provided by the welding power supply 100 by a wire feeder 108 power supply circuit, or another type power circuit. In addition to power for the wire feeder 108, one or more control signals may also be provided to allow proper operation of the wire feeder 108 and welding power supply 100. These control signals may be analog or digital and may provide control and communication in a bi-directional manner. The power and control signals may be provided to the wire feeder 108 from the welding power source via cable(s) 106.

The illustrated welding power supply 100 has a control panel 112 with various types of control features 112, such as digital displays, control dials or potentiometers, control switches, LED indicators, etc. These control features 112 provide for normal operation and control of the welding system.

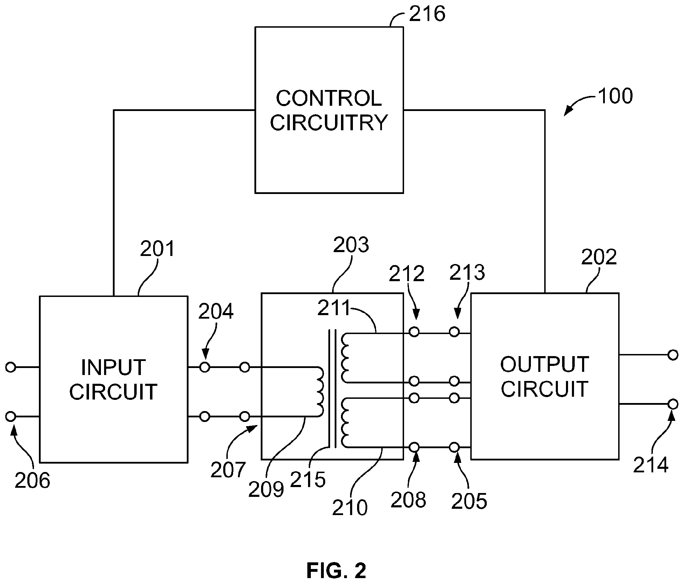

FIG. 2 shows a block diagram of an example welding-type power supply 100. The power supply 100 includes an input circuit 201, an output circuit 202 and a high-frequency transformer 203. Collectively, the input circuit 201, the output circuit 202, and the transformer 203 may be referred to as a switched mode power supply.

The transformer 203 includes a magnetic core 215 (e.g., a ferrite core). The core 215 may be selected to lower leakage inductance, for example based on the amount of turns used. The transformer 203 is connected between an output 204 of input circuit 201 and inputs 205 and 213 of the output circuit 202. The input circuit 201 is configured to receive an input signal from an external source of power at the input 206. Input signal and output signal as used herein include voltage signals, current signals and power signals. The input circuit 201 includes any circuit capable of receiving an input signal from a source of power and providing an output signal usable by a transformer. Input circuits can include as part of their circuitry, microprocessors, analog and digital controllers, switches, other transformers, rectifiers, inverters, converters, choppers, comparators, phased controlled devices, buses, pre-regulators, diodes, inductors, capacitors, or resistors. The output circuit 202 includes any circuit capable of receiving an input signal from a transformer and providing an output signal suitable for a desired purpose, such as welding-type output signal. Output circuits can include microprocessors, analog and digital controllers, switches, other transformers, rectifiers, inverters, converters, choppers, comparators, phased controlled devices, buses, pre-regulators, diodes, inductors, capacitors, or resistors.

In some examples, control circuitry 216 controls the operation of the input circuit 201 and/or the output circuit 202. The control circuitry 216 may include one or more microprocessors and/or other processing and/or control circuitry, memory, storage devices, input/output circuitry, and/or other circuitry.

The input signal received at the input 206 is processed by the various circuitry of the input circuit 201 and the processed signal is provided to the transformer 203 via the output 204. The output signal from the input circuit 201 is received by the transformer 303 via the input 207 and transformed to the outputs 208, 212. The transformer 203 includes a primary winding 209 connected to the output 204 of input circuit 201 and a first secondary winding 210 connected to the input 205 of output circuit 202. The secondary windings 210, 211 is magnetically coupled with the primary winding 209.

As illustrated, the power supply 100 also includes a second secondary winding 211 magnetically coupled with the primary winding 209. The secondary windings 210, 211 may be coupled to a commutator and/or a rectifier in the output circuit 202 to control a polarity of the output 214.

The output signal from the secondary winding 210 is received by the output circuit 202 at input 105. The input signal is processed by the various circuitry of output circuit 202 and the processed signal is provided at the output 214 as a signal suitable for a welding-type application.

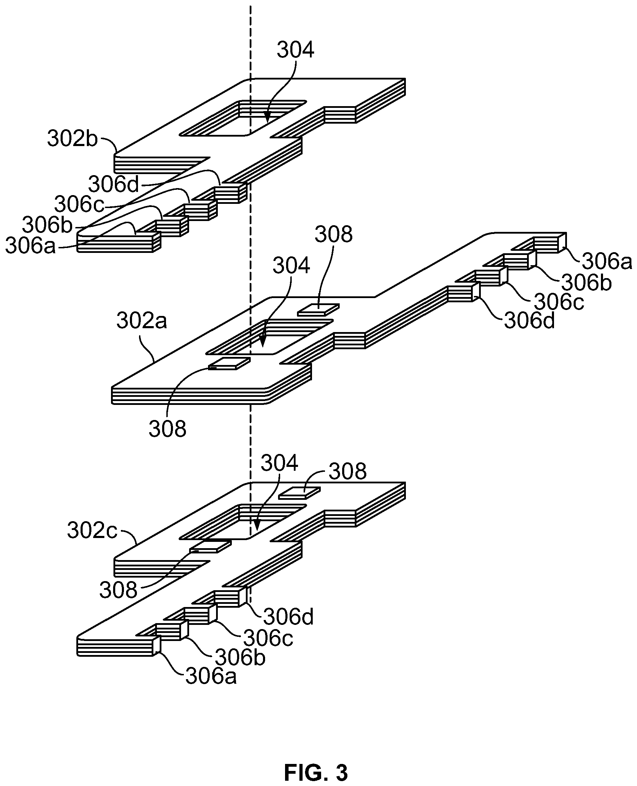

FIG. 3 is an exploded view of an example set of winding boards 302a, 302b, 302c that, in combination with a magnetic core, may be used to implement a low-leakage planar transformer 300. The low-leakage planar transformer 300 may be used to implement the transformer 203 of FIG. 2.

The example low-leakage planar transformer 300 includes a primary winding board 302a and two secondary winding boards 302b, 302c. The primary winding board 302a may implement all or a portion of the primary winding 209 of the transformer 203, and the secondary winding boards 302b, 302c may implement all or a portion of the respective secondary windings 210, 211. In the example of FIG. 3, the primary winding board 302a and each of the secondary winding boards 302b, 302c are identical, but are oriented in opposite directions with respect to the core.

Each of the primary winding board 302a and the secondary winding boards 302b, 302c includes an aperture 304a, through which a magnetic core and/or an alignment structure may extend to align and/or retain the winding boards 302a-302c. Each of the primary winding board 302a and the secondary winding boards 302b, 302c also include mounting tabs 306a, 306b, 306c, 306d, which provide structural support for mounting the transformer 300 (e.g., to a main board).

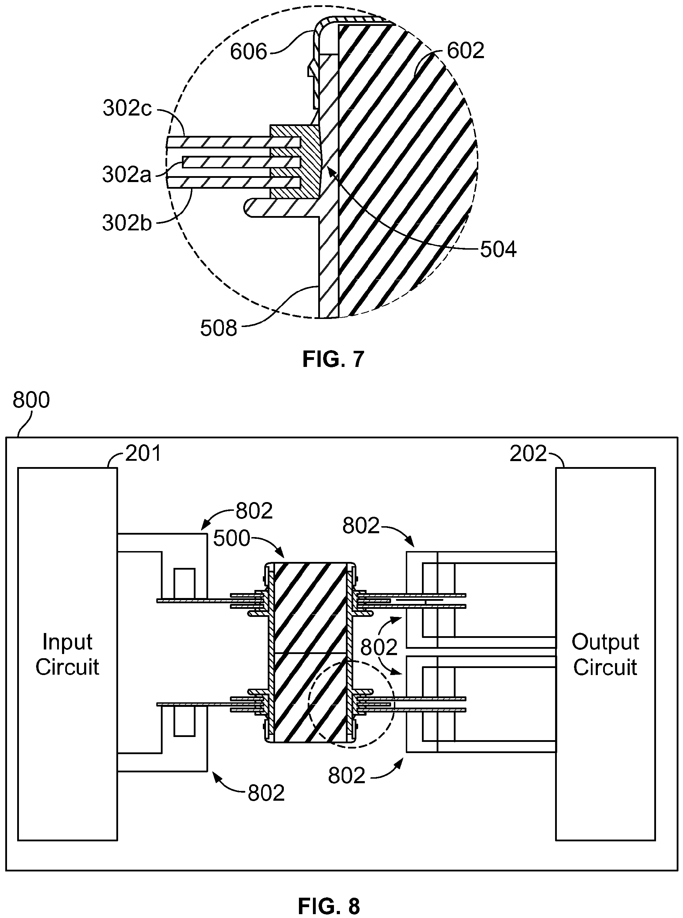

The primary winding board 302a is separated from each of the secondary winding boards 302b, 302c via respective spacers 308. In the example of FIG. 3, the spacers 308 are positioned between adjacent ones of the winding boards 302a-302c, and position the primary winding board 302a a predetermined distance from each of the secondary winding boards 302b, 302c. The example spacers 308 may be a foam tape or insulating plastic piece, having a predetermined thickness to separate the adjacent ones of the winding boards 302a-302c by the predetermined distance. However, the spacers may be implemented using other materials and/or structures, such as the separation structure disclosed below with reference to FIG. 7.

The layers of each of the winding boards 302a-302c are constructed using circuit board materials, such as FR-4 rated fiberglass. The turn(s) of the winding boards 302a-302c are constructed by applying conductive traces (e.g., printed copper traces) onto the layers.

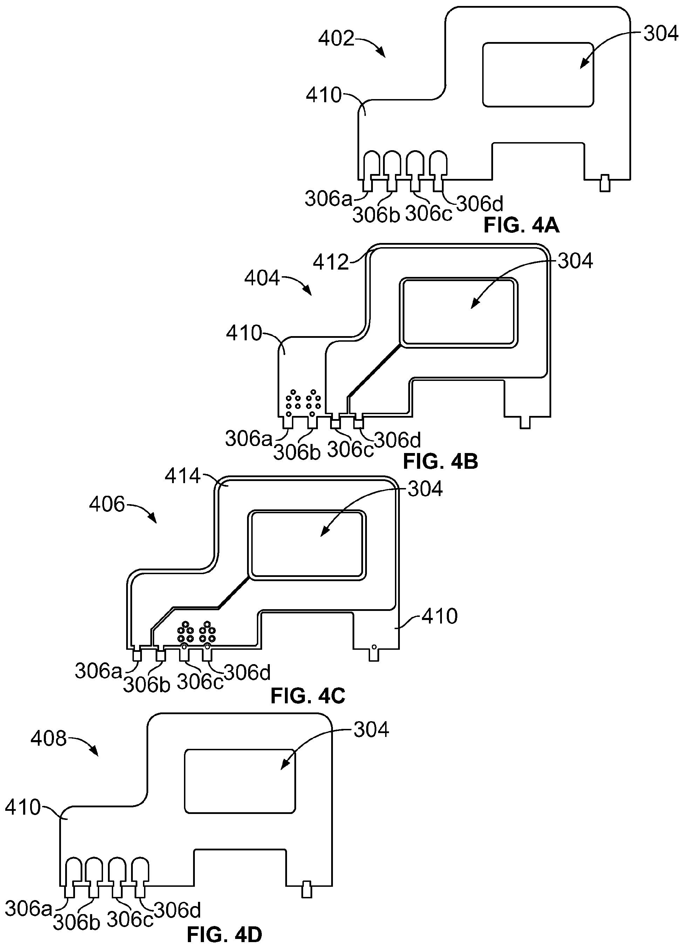

FIGS. 4A-4D illustrate example printed circuit board layers 402, 404, 406, 408 of one of the winding boards 302a-302c of FIG. 3. The example layers 402-408 are arranged with layers 402 and 408 as the outer layers, and layers 404 and 406 as the inner layers. When the layers 402-408 are formed, the layers 402-408 are bonded (e.g., cemented), fused, or otherwise permanently affixed, to form the respective winding board 302a-302c. Each of the layers 402-408 includes the mounting tabs 306a-306d.

The first layer 402 includes a layer of substrate 410 (e.g., fiberglass), and includes conductive traces on the mounting tabs 306a-306d.

The second layer 404 includes a first printed winding 412 (or turn) laid onto a layer of the substrate 410. The first printed winding 412 is copper strip or another conductive material, and may be laid, printed, or otherwise applied to the substrate 410. A first end of the first printed winding 412 is coupled to the first mounting tab 306a and a second end of the first printed winding 412 is coupled to the second mounting tab 306b.

The third layer 406 includes a second printed winding 414 (or turn) laid onto a layer of the substrate 410. Like the first printed winding 412, the second printed winding 414 is copper strip or another conductive material, and may be laid, printed, or otherwise applied to the substrate 410. A first end of the second printed winding 414 is coupled to the third mounting tab 306c and a second end of the second printed winding 414 is coupled to the fourth mounting tab 306d.

The first printed winding 412 is insulated from the second printed winding 414 by a layer of the substrate 410. Layers of the substrate 410 on the printed circuit board layers 402-408 collectively envelop and insulate both printed windings 412, 414, and isolate the printed windings 412, 414 from the exterior of the winding board 302a-302c (e.g., from the core 602).

The fourth layer 408 includes a layer of the substrate 410, and may also include conductive traces on the mounting tabs 306a-306d. The conductive traces on the mounting tabs 306a-306d may facilitate electrical connection between the turns and an circuit board to which the winding board 302a-302c is physically mounted (e.g., via soldering).

The example winding board 302a illustrated in FIG. 4 includes two windings 412, 414, which may be coupled in parallel or in series (e.g., to control parasitic capacitance and/or parasitic inductance, to control a turns ratio between the primary and secondary windings 209, 210, 212 of the transformer 203).

The dimensions of the layers 402-408 and/or the printed windings 412, 414 may be selected based on the average and/or peak of the voltage, current, and/or load on the transformer 203, and/or an operating temperature limit of the transformer 203.

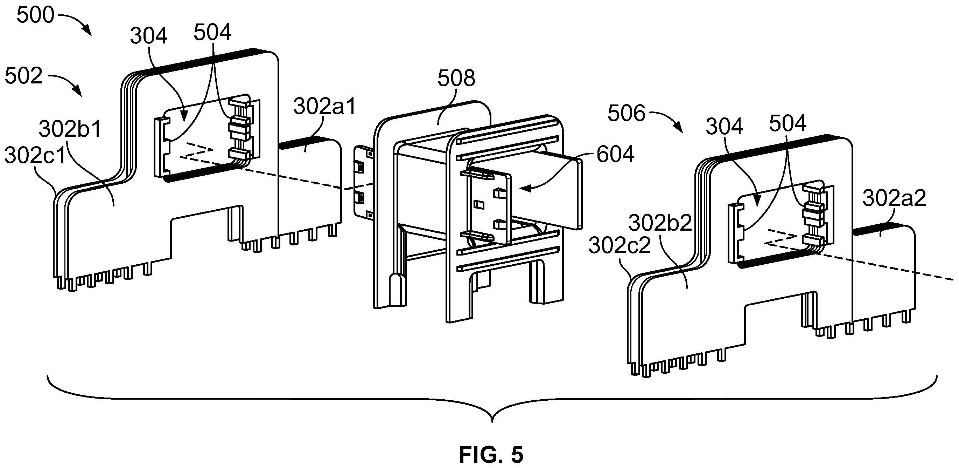

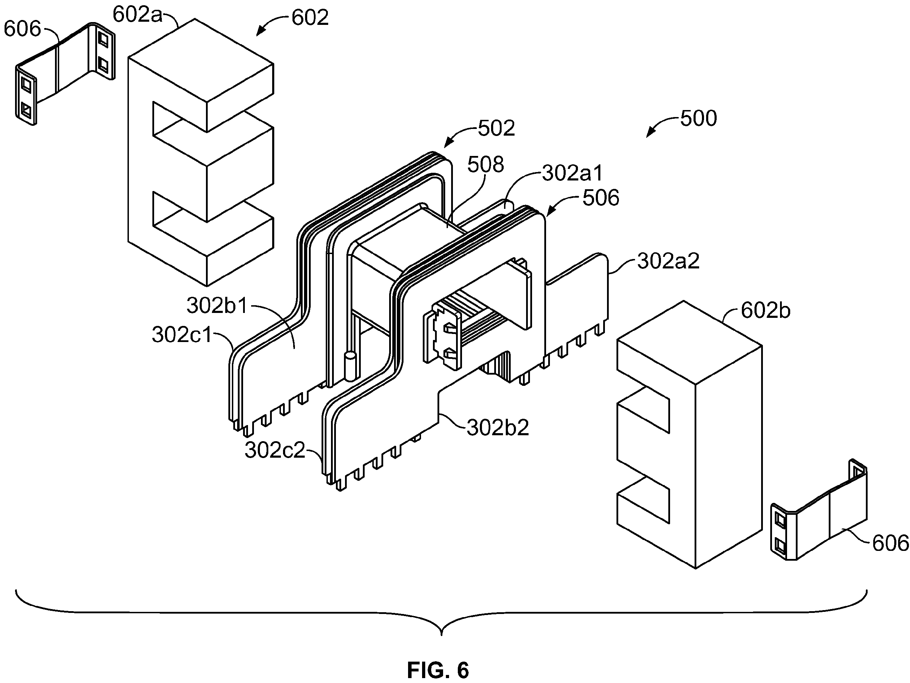

FIG. 5 is a partially exploded view of an example transformer 500 that may be used to implement the transformer 203 of FIG. 2. FIG. 6 is another partially exploded view of the transformer 500 of FIG. 5, including a magnetic core 602.

The example transformer 500 includes a first set 502 of winding boards, including a first primary winding board 302a1 and secondary winding boards 302b1, 302c1. The first primary winding board 302a1 has a different (e.g., opposite) orientation than the secondary winding boards 302b1, 302c1 with respect to the magnetic core 602. The first set 502 of winding boards is secured and spaced apart using spacing clips 504.

The transformer 500 further includes a second set 506 of winding boards, which includes a second primary winding board 302a2 and secondary winding boards 302b2, 302c2. The second primary winding board 302a2 has a different (e.g., opposite) orientation than the secondary winding boards 302b2, 302c2 with respect to the magnetic core 602. The second set 502 of winding boards also is secured and spaced apart using spacing clips 504.

The example transformer 500 further includes a bobbin 508, which positions and secures the first and second sets 502, 506 of winding boards at predetermined positions with respect to the magnetic core 602. The bobbin 508 engages the spacing clips 504 via clip surfaces to secure the sets 502, 506 of winding boards in position, as illustrated in FIG. 6.

The magnetic core 602 includes two E-type core portions 602a, 602b, which extend through the respective apertures 304 of the sets 502, 506 of winding boards and through a corresponding aperture 604 in the bobbin 508. The magnetic core portions 602a, 602b are secured to the bobbin 508 via core clips 606. However, other types of cores may be used, such as a planar-type (e.g., E43) ferrite core reduce the profile of the transformer. The use of the E-type cores allows for two sets 502, 506 of the primary and secondary winding boards to be coupled to the E-type magnetic core 602. The use of the E-type magnetic core 602, the sets 502, 506 of winding boards, and the bobbin 508 may reduce the complexity of the assembly by reducing the number of pieces making up the magnetic core 602. Each of the sets 502, 506 has low leakage between the winding boards 302a-302c (e.g., from the primary winding to the secondary windings) making up the set 502, 506.

FIG. 7 is a more detailed view of an example spacing clip 504 of FIG. 5. The example spacing clip 504 includes slots 702, into which the winding boards 302a, 302b, 302c are inserted. The spacing clip 504 is held in place between two shoulders 704, 706. The shoulder 704 allows for insertion of the bobbin 508 into the aperture 304 of the winding boards 302a-302c and past the shoulder 704, which has a tapered surface 708 to allow for insertion and a retaining surface 710 to retain the winding boards 302a-302c in place against the shoulder 706 via the spacing clip 504.

FIG. 8 illustrates the example transformer 500 of FIGS. 5 and 6 coupled to a second circuit board 800. The second circuit board 800 may include additional components of the input circuit 201 (e.g., switching elements) and/or the output circuit 202, and/or the control circuitry 216. Additionally or alternatively, the second circuit board 800 may be coupled to one or more other circuit boards for delivery of input current, output current, and/or control signals.

The example transformer 500 is physically and electrically coupled to the second circuit board 800 via the mounting tabs 306a-306d of each of the winding boards 302a-302c. For example, the mounting tabs 306a-306d may be inserted into slots or onto solder pads, and soldered into place. In other examples, the mounting tabs 306a-306d may be coupled to the second circuit board using connectors.

Traces 802 on the second circuit board 800 provide coupling between the winding boards 302a-302c (e.g., the windings 412, 414 of each of the winding boards 302a-302c) and the input circuit 201 and/or the output circuit 202. Additionally, one or more traces 802 may couple individual windings 412, 414 of the winding boards 302a-302c to other turns, in parallel (e.g., for the secondary winding boards 302b, 302c) and/or in series (e.g., for the primary winding boards 302a), to set a turn ratio of the transformer 500. The secondary winding boards 302b-302c may be coupled to the circuit board 800 proximate to the output circuit 202, such as by limiting or minimizing the distance between the secondary winding boards 302b-302c and the output circuit 202, which may minimize losses and/or parasitic capacitance. Similarly, the primary winding boards 302a may be coupled to the circuit board 800 proximate to the input circuit 201, such as by limiting or minimizing the distance between the primary winding boards 302a and the input circuit 201, which may minimize losses and/or parasitic capacitance.

While the example circuit board 800 of FIG. 8 includes a single transformer 500, in other examples the circuit board 800 may include multiple transformers to implement the welding-type power supply 100. For example, circuit board 800 may implement one or more of the transformers of the example welding-type power supplies disclosed in U.S. Patent No. 11,027,357. The multiple transformers may allow for a sufficient turns ratio to reduce the voltage from the input circuit 201 to the output circuit 202, when distributed among the transformers. The low leakage of the planar windings may be advantageous for the example welding-type power supplies disclosed in U.S. Patent No. 11,027,357.

The example circuit board 800 and the transformer 500 may be configured to operate the transformer at a mean temperature less than or equal to 90°C. For example, the transformer 500, including the winding boards 302a-302c, the layers 402-408, the printed windings 412, 414, the magnetic core 602, and/or the remaining components may be structured, assembled, and operated at voltages and/or currents that result in a mean temperature less than or equal to 90°C at the maximum rated load of the transformer 500 and/or the maximum rated load of the power supply 100.

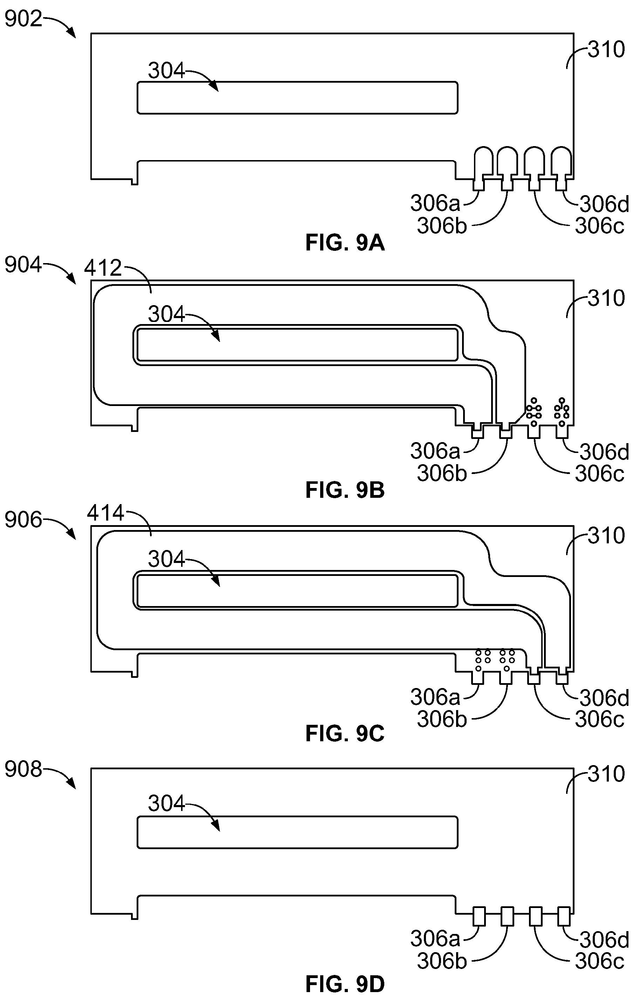

FIGS. 9A-9D illustrate example printed circuit board layers 902, 904, 906, 908 of another example winding board. The example printed circuit board layers 902, 904, 906, 908 are similar to corresponding ones of the circuit board layers 402-408, including apertures 304, mounting tabs 306a-306d, substrate 310, and first and second windings 412, 414.

The present devices and/or methods may be realized in hardware, software, or a combination of hardware and software. The present methods and/or systems may be realized in a centralized fashion in at least one computing system, processors, and/or other logic circuits, or in a distributed fashion where different elements are spread across several interconnected computing systems, processors, and/or other logic circuits. Any kind of computing system or other apparatus adapted for carrying out the methods described herein is suited. A typical combination of hardware and software may be a processing system integrated into a welding power supply with a program or other code that, when being loaded and executed, controls the welding power supply such that it carries out the methods described herein. Another typical implementation may comprise an application specific integrated circuit or chip such as field programmable gate arrays (FPGAs), a programmable logic device (PLD) or complex programmable logic device (CPLD), and/or a system-on-a-chip (SoC). Some implementations may comprise a non-transitory machine-readable (e.g., computer readable) medium (e.g., FLASH memory, optical disk, magnetic storage disk, or the like) having stored thereon one or more lines of code executable by a machine, thereby causing the machine to perform processes as described herein. As used herein, the term "non-transitory machine readable medium" is defined to include all types of machine readable storage media and to exclude propagating signals.

While the present method and/or system has been described with reference to certain implementations, it will be understood by those skilled in the art that various changes may be made and equivalents may be substituted without departing from the scope of the present method and/or system. In addition, many modifications may be made to adapt a particular situation or material to the teachings of the present disclosure without departing from its scope. For example, block and/or components of disclosed examples may be combined, divided, re-arranged, and/or otherwise modified. Therefore, the present method and/or system are not limited to the particular implementations disclosed. Instead, the present method and/or system will include all implementations falling within the scope of the appended claims, both literally and under the doctrine of equivalents.

## Claims

1. A planar transformer, comprising:
a magnetic core;
a first primary winding board secured to the magnetic core;
a first secondary winding board secured to the magnetic core, wherein each of the first primary winding board and the first secondary winding board comprise:
a first printed winding on a first layer of a circuit board;
first and second mounting tabs on the first layer of the circuit board or a third layer of the circuit board, and coupled to the first printed winding;
a second printed winding on a second layer of the circuit board; and
third and fourth mounting tabs on the second layer of the circuit board or a fourth layer of the circuit board, and coupled to the second printed winding; and
a first spacer positioned between the first primary winding board and the first secondary winding board to position the first primary winding board a predetermined distance from the first secondary winding board.

2. The planar transformer as defined in claim 1, wherein the first primary winding board and the first secondary winding board are identical.

3. The planar transformer as defined in claim 2, wherein the first primary winding board has a different orientation than the first secondary winding board relative to the magnetic core.

4. The planar transformer as defined in claim 3, further comprising:
a second secondary winding board secured to the magnetic core, wherein the second secondary winding board is identical to the first secondary winding board; and
a second spacer positioned between the first primary winding board and the second secondary winding board to position the first primary winding board a predetermined distance from the second secondary winding board,
and optionally wherein the second secondary winding board has a same orientation as the first secondary winding board relative to the magnetic core, and the second secondary winding board is positioned on an opposite side of the first primary winding board from the first secondary winding board.

5. The planar transformer as defined in claim 1, further comprising:
a second primary winding board and a second secondary winding board, wherein each of the second primary winding board and the second secondary winding board comprise the first and second printed windings and the first, second, third, and fourth mounting tabs; and
a bobbin configured to position the first primary winding board and the first secondary winding board on a first side of the magnetic core and position the second primary winding board and the second secondary winding board on a second side of the magnetic core.

6. The planar transformer as defined in claim 1, wherein the first and second circuit board layers insulate the first printed winding and the second printed winding.

7. The planar transformer as defined in claim 1, wherein each of the first printed winding and the second printed winding comprise copper strip.

8. The planar transformer as defined in claim 1, wherein the first printed winding and the second printed winding of the first secondary winding board can be selectively configured in series or in parallel by connecting the first, second, third, and fourth winding tabs.

9. The planar transformer as defined in claim 1, wherein the first printed winding and the second printed winding on of the first primary winding board can be selectively configured in series or in parallel by connecting the first, second, third, and fourth winding tabs.

10. A welding-type power supply, comprising:
a main circuit board;
power conversion circuitry coupled to the main circuit board and configured to convert input power to welding-type power, the power conversion circuitry comprising a switched mode power supply, the switched mode power supply comprising:
a switching element coupled to the main circuit board;
a planar transformer coupled to the main circuit board, the planar transformer comprising:
a magnetic core;
a first primary winding board secured to the magnetic core and coupled to the switching element;
a first secondary winding board secured to the magnetic core, wherein each of the first primary winding board and the first secondary winding board comprise:
a first printed winding on a first layer of a circuit board;
first and second mounting tabs on the first layer of the circuit board or a third layer of the circuit board, and coupled to the first printed winding;
a second printed winding on a second layer of the circuit board; and
third and fourth mounting tabs on the second layer of the circuit board or a fourth layer of the circuit board, and coupled to the second printed winding; and
a first spacer positioned between the first primary winding board and the first secondary winding board to position the first primary winding board a predetermined distance from the first secondary winding board; and
an output stage circuit coupled to the main circuit board and coupled to the first secondary winding board.

11. The welding-type power supply as defined in claim 10, wherein the first, second, third and fourth mounting tabs of each of the first primary winding board and the first secondary mounting board are soldered to the main circuit board to attach the planar transformer to the main circuit board.

12. The welding-type power supply as defined in claim 10, wherein the output stage circuit comprises at least one of a rectifier or a commutator.

13. The welding-type power supply as defined in claim 10, wherein the first secondary winding board is mounted to the main circuit board adjacent the output stage circuit.

14. The welding-type power supply as defined in claim 10, wherein the transformer operates at less than mean of 90C at a rated maximum load of the transformer.

15. The welding-type power supply as defined in claim 10, wherein the first layer and the second layer of the winding board comprise fiberglass, and the fiberglass is provides primary-to-secondary insulation between the first and second winding boards.
